(19) Europäisches Patentamt
European Patent Office
Office européen des brevets

(11) **EP 2 822 208 B1**

(12) **FASCICULE DE BREVET EUROPEEN**

(45) Date de publication et mention
de la délivrance du brevet:
**30.10.2019   Bulletin 2019/44**

(51) Int Cl.:
*H04L 1/00* (2006.01)          *H04L 5/00* (2006.01)

(21) Numéro de dépôt: **14175184.2**

(22) Date de dépôt: **01.07.2014**

(54) **Procédé de détermination de paramètres de transmission de données**

Verfahren zur Bestimung von Datenübertragungsparameter

Method of determining data transmission parameters

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **02.07.2013   FR 1301599**

(43) Date de publication de la demande:
**07.01.2015   Bulletin 2015/02**

(73) Titulaire: **THALES**
**92400 Courbevoie (FR)**

(72) Inventeurs:
• **Touret, Marc**
**92622 Gennevilliers (FR)**
• **Le Stang, Jean-Baptiste**
**92622 Gennevilliers (FR)**

(74) Mandataire: **Priori, Enrico et al**
**Marks & Clerk France**
**Immeuble "Visium"**
**22, avenue Aristide Briand**
**94117 Arcueil Cedex (FR)**

(56) Documents cités:
EP-A1- 1 641 160          US-A1- 2003 043 732
US-A1- 2004 184 398       US-A1- 2004 264 588
US-A1- 2011 179 336

**Description**

La présente invention concerne un procédé de détermination des paramètres utilisés pour la transmission de données par un système de télécommunication. Le système de télécommunication peut par exemple être un système de transmission satellitaire constitué d'un ou plusieurs satellites et d'un ou plusieurs terminaux terrestres.

Il est connu dans l'état de la technique des procédés de détermination des paramètres définissant le codage correcteur de données et la modulation utilisés pour la transmission de données. Cependant ces procédés sont conçus pour s'adapter uniquement à des variations de l'atténuation du canal de propagation (connu aussi sous le nom anglais de « fading »). Ces procédés de détermination des paramètres définissant le taux de codage du code correcteur et la modulation ne prennent pas en compte les autres types de perturbations de la transmission comme les interférences. De plus, il est connu dans l'état de la technique, des systèmes de transmission qui pour palier aux conditions de propagation dégradées, du fait d'une ou plusieurs sources d'interférences (volontaires ou non), utilisent plusieurs fréquences d'émission. Des exemples de ces procédés sont le saut de fréquence (« Frequency Hopping Spread Spectrum » en Anglais) et la répartition en fréquences orthogonales de type OFDM pour « Orthogonal Frequency Division Multiplexing» en Anglais). En effet la ou les interférences n'ont généralement des effets que sur une portion des fréquences utilisées par le système de transmission. Dans ce cas, certaines porteuses sont très bien reçues (pas d'interférence et le rapport entre la puissance du signal reçu à la puissance du bruit reçu est supérieur au SNR requis pour respecter le taux d'erreur binaire (TEB) fixé par exemple TEB = $10^{-5}$) et d'autres sont très mal reçues (car présence d'interférences et le rapport entre la puissance du signal à la puissance du bruit est inférieur à celui requis pour respecter le taux d'erreur binaire (TEB) fixé par exemple TEB = $10^{-5}$). Ce rapport entre la puissance du signal reçu à la puissance du bruit reçu RSB est aussi communément appelé rapport signal à bruit ou SNR « signal to noise ratio » en Anglais. Or dans l'état de la technique les procédés d'adaptation des paramètres de transmission ne prennent pas en compte ces multiples fréquences. Ainsi, ces procédés, lorsque peu de fréquences sont impactées par des interférences, surestiment généralement le rapport entre la puissance du signal reçu à la puissance du bruit. Dans ce cas ces procédés privilégient un type de modulation et un type de code correcteur d'erreur très efficace spectralement mais peu robuste vis à vis des erreurs de transmission et donc qui ne résistent pas aux interférences. La transmission est alors erronée. D'autres documents, comme la demande de brevet EP 1 641 160 A1, prennent en compte les multiples fréquences, mais n'adaptent pas le procédé de détermination des paramètres de la transmission au taux de fréquences impactées par les interférences.

La présente invention vise donc à remédier à ces problèmes en proposant un procédé de détermination des paramètres de transmission de données par un système de communication, permettant une meilleure adaptation des paramètres du code correcteur d'erreur et de la modulation aux conditions du canal de propagation.

Ainsi l'invention propose un procédé de détermination des paramètres utilisés pour la transmission de données, la transmission étant réalisée en utilisant une pluralité de fréquences d'émission. Le procédé comporte une première étape de détermination, associé à chaque fréquence, de la valeur d'un premier paramètre représentatif du rapport entre la puissance du signal transmis en utilisant la fréquence et la puissance du bruit présent sur la fréquence d'émission. Le procédé comporte ensuite une deuxième étape de détermination de la valeur d'un deuxième paramètre représentatif d'un rapport entre le nombre de fréquences pour lesquels le premier paramètre est inférieur à un premier seuil et le nombre total de fréquences d'émission. Ensuite une troisième étape permet la détermination d'un troisième paramètre représentatif d'une variance de la dispersion des valeurs prises par les valeurs des premiers paramètres. Une quatrième étape permet la détermination de la valeur d'un quatrième paramètre représentatif de la moyenne des valeurs des premiers paramètres diminuée d'une valeur dépendant du troisième paramètre et de la valeur du deuxième paramètre. Enfin une cinquième étape permet de déterminer un type de modulation et un type de codage correcteur d'erreur et leurs paramètres respectifs à utiliser pour la transmission des données à partir de la valeur du quatrième paramètre.

Le premier seuil est égal au SNR requis, pour respecter le taux d'erreur binaire (TEB) requis pour la transmission de données, diminué d'une valeur typique de 4dB.

Les premiers paramètres peuvent aussi être appelés SNR ou RSB locaux, le deuxième paramètre taux d'interférences et le troisième paramètre SNR ou RSB slot.

Ainsi afin de s'adapter aux variations des conditions de propagations, des mécanismes d'adaptation des modes de codage et de modulation sont mis en œuvre. Le but est d'adapter dynamiquement les paramètres de la forme d'onde pour s'adapter au bilan de liaison. Ce mécanisme est connu sous l'acronyme anglais d'ACM pour « Adaptative Coding and Modulation »

Ce procédé d'adaptation est connu de l'homme du métier et permet, en comparant le rapport signal sur bruit à des valeurs de référence, de définir le mode de codage et de modulation adapté aux conditions de la liaison.

Une méthode du choix du type de modulation et du type de codage correcteur d'erreur et leurs paramètres respectifs est donnée dans le paragraphe à titre d'exemple non limitatif.

Le choix de la modulation et du codage correcteur (nommé aussi suivant l'acronyme MODCOD pour Modulation Codage) est réalisé en fonction de la valeur du quatrième paramètre. On considère à titre d'exemple non limitatif que ce quatrième paramètre est exprimé en dB. Dans ce cas et en utilisant le tableau suivant on considère que les modulations et codages qu'il est possible d'utiliser sont ceux pour lesquels le SNR requis pour respecter le taux d'erreur binaire (TEB) requis pour la transmission de données (colonne 3) est inférieur au quatrième paramètre

| Indice MODCOD | MODCOD | SNR requis (dB) |
|---|---|---|
| 1 | QPSK ratio 1/4 | -1.6 |
| 2 | QPSK ratio 1/3 | -0.6 |
| 3 | QPSK ratio 2/5 | 0.2 |
| 4 | QPSK ratio 1/2 | 1.1 |
| 5 | QPSK ratio 3/5 | 2.4 |
| 6 | QPSK ratio 2/3 | 3.2 |
| 7 | QPSK ratio 3/4 | 4.2 |
| 8 | QPSK ratio 4/5 | 4.8 |
| 9 | QPSK ratio 5/6 | 5.4 |
| 10 | QPSK ratio 8/9 | 6.7 |
| 12 | 8PSK ratio 3/5 | 6.4 |
| 13 | 8PSK ratio 2/3 | 7.5 |
| 14 | 8PSK ratio 3/4 | 8.4 |
| 15 | 8PSK ratio 5/6 | 9.7 |
| 16 | 8PSK ratio 8/9 | 10.9 |
| 17 | 16APSK ratio 2/3 | 9.9 |
| 18 | 16APSK ratio 3/4 | 11.1 |
| 19 | 16APSK ratio 4/5 | 11.7 |
| 20 | 16APSK ratio 5/6 | 12.6 |
| 21 | 16APSK ratio 8/9 | 13.9 |

Ainsi dans le cas où le quatrième paramètre à une valeur de 3dB il est possible d'utiliser les modulations et codages référencés par les indices 1 à 5. De manière optimale on utilise la modulation et le codage dont la valeur du SNR de décodage est la plus proche (mais inférieure) à la valeur du quatrième paramètre. Dans le cas de notre exemple le couple modulation codage optimal est celui dont l'indice est 5.

Ainsi ce procédé permet d'avoir une adaptation de la modulation et taux du codage correcteur dans toutes les situations (avec ou sans interférence affectant une partie des fréquences de transmission) et qui permet une adaptation optimale des paramètres de la transmission en cas d'interférences. En particulier la détermination du quatrième paramètre permet d'obtenir un rapport signal à bruit estimé prenant en compte le type et la répartition des interférences et ainsi de choisir un type de modulation et du taux de codage du code correcteur d'erreurs optimisés pour les conditions de propagation.

Avantageusement la première étape est en outre adaptée pour borner la valeur dudit premier paramètre entre deux valeurs dépendantes de la valeur du rapport signal sur bruit optimale pour l'utilisation d'un type de modulation et d'un type de codage correcteur. La valeur des bornes est plus particulièrement fonction du type de modulation et du type de codage utilisé au moment de la mesure des SNR locaux.

La borne inférieure est égale au rapport signal sur bruit, requis pour respecter le taux d'erreur binaire (TEB) requis pour la transmission de données, minoré d'une valeur typique de 4dB.

Ceci afin de ne pas surestimer l'importance des porteuses où il y a des interférences et qui ont donc un premier paramètre ou rapport signal sur bruit local très inférieur au rapport signal sur bruit requis pour l'utilisation d'une modulation donnée ou MODCOD.

La borne supérieure est égale au rapport signal sur bruit, requis pour respecter le taux d'erreur binaire (TEB) requis pour la transmission de données, majoré d'une valeur typique de 8dB.

En absence d'interférence, ce bornage est sans impact sur la mesure du rapport signal à bruit. En effet dans un procédé d'adaptation de codage et de modulation ce choix de codage est de modulation de la forme d'onde est optimisé pour que le rapport signal à bruit de fonctionnement du couple modulation codage choisi soit égal au rapport signal à bruit mesuré. De plus dans le cas d'un bruit blanc gaussien, la variance des mesures de rapport signal est généralement inférieure à 1 dB donc une mesure ne dépassera pas les bornes.

Avantageusement l'étape de détermination d'un type de modulation est adaptée en outre pour la détermination d'un type de modulation par comparaison entre la valeur dudit deuxième paramètre et un deuxième seuil.

Typiquement la valeur de ce deuxième seuil est de 45%. Ainsi les modulations ou MODCOD QPSK Ratio ¼, QPSK Ratio 1/3 peuvent être utilisés dans le cas d'interférences (deuxième paramètre > 45%), alors que les autres MODCOD QPSK Ratio 2/5 et QPSK Ratio ½ peuvent aussi être utilisés dans des conditions d'interférences moindre (deuxième paramètre < 45%).

L'invention concerne également un système adapté pour la mise en œuvre du procédé décrit précédemment et comportant un premier terminal communicant avec un deuxième terminal via un satellite.

De plus le premier terminal est adapté pour la mise en œuvre des première, deuxième et troisième et quatrième étapes du procédé.

Le deuxième terminal est adapté pour la mise en œuvre de la cinquième étape du procédé.

Enfin les premier et deuxième terminaux peuvent être respectivement adaptés pour émettre et recevoir les valeurs des premiers paramètres et de la variance de la dispersion des premiers paramètres.

L'invention concerne en outre un système adapté pour la mise en œuvre du procédé décrit précédemment et comportant un premier terminal communicant avec un deuxième terminal via un satellite.

Le premier terminal est adapté pour la mise en œuvre des première, deuxième, troisième, quatrième, cinquième étapes du procédé.

Les premier et deuxième terminaux sont respectivement adaptés pour émettre et recevoir le type de modulation et le type de codage correcteur d'erreur à utiliser pour la transmission des données ainsi que la valeur des paramètres de la modulation et du codage correcteur à utiliser pour la transmission des données.

L'invention sera mieux comprise et d'autres avantages apparaîtront à la lecture de la description détaillée faite à titre d'exemple non limitatif et à l'aide des figures parmi lesquelles :

- la figure 1 présente le procédé décrit dans cette invention
- la figure 2 présente le système utilisant le procédé de l'invention

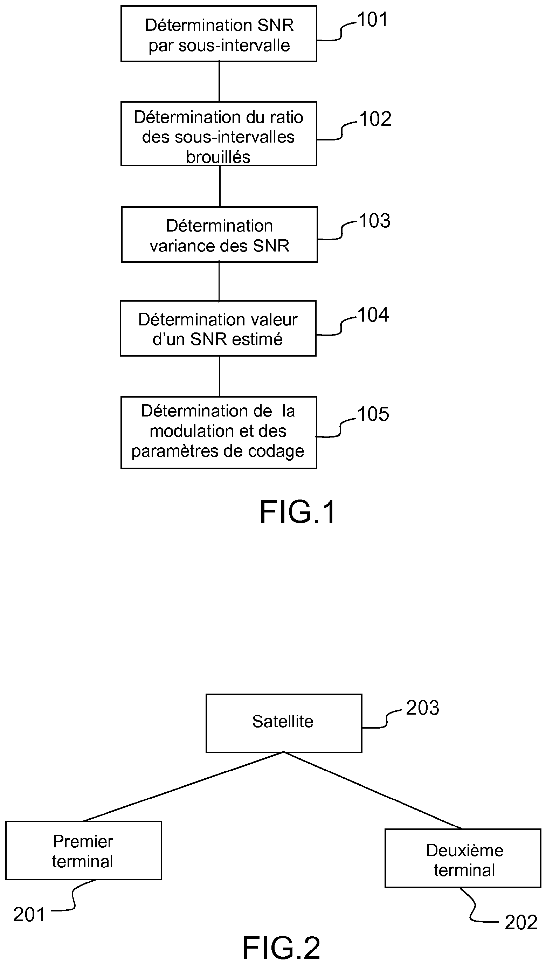

La figure 1 décrit les différentes étapes du procédé de détermination des paramètres utilisés pour la transmission de données, la transmission étant réalisée en utilisant une pluralité de fréquences d'émission.

Ce procédé comporte une première étape 101 de détermination pour chaque fréquence de la valeur d'un premier paramètre, nommé RSB local, représentatif d'un rapport entre la puissance du signal transmis en utilisant et la puissance du bruit. Ensuite le procédé comporte une deuxième étape 102 de détermination de la valeur d'un deuxième paramètre, nommé RSB slot, représentatif d'un rapport entre le nombre de fréquences pour lesquels la valeur du premier paramètre est inférieure à un premier seuil et le nombre total de fréquences. Le procédé comporte aussi une troisième étape 103 de détermination d'un troisième paramètre représentatif d'une variance de la dispersion des valeurs prises par les premiers paramètres. Le procédé comporte ensuite une quatrième étape 104 de détermination de la valeur d'un quatrième paramètre représentatif de la moyenne des valeurs des premiers paramètres diminuée d'une valeur dépendant du deuxième et troisième paramètre. Ce quatrième paramètre est l'équivalent d'un rapport signal sur bruit dans lequel l'influence de la dispersion de fréquences brouillées a été prise en compte. Enfin le procédé comporte une cinquième étape 105 permettant de déterminer un type de modulation et un type de codage correcteur d'erreur à utiliser pour la transmission des données à partir de la valeur du quatrième paramètre.

En d'autres termes le procédé utilise les principes suivants :

- On limite la valeur du rapport signal sur bruit par une borne inférieure afin de ne pas surestimer l'importance des fréquences brouillés (qui sont les fréquences ayant un faible rapport signal sur bruit).

- On limite la valeur du rapport signal sur bruit par une borne supérieure afin de ne pas surestimer l'importance des fréquences non-brouillées (qui sont les fréquences ayant un fort rapport signal sur bruit).

- On utilise la détermination de la présence ou de l'absence d'interférences et la variance de rapport signal sur bruit associé aux différentes fréquences afin de déterminer la modulation et du taux de codage à utiliser. Ceci permet, en prenant en compte l'horizon temporel du slot, de s'adapter aux variations rapides ou lentes des conditions de propagation du signal.

Dans un mode de réalisation l'étape 101 de détermination de la valeur d'un premier paramètre (RSB local) représentatif du rapport de la puissance du signal sur la puissance du sous du bruit mesurées sur la fréquence de transmission est en outre adaptée pour effectuer un bornage de ce premier paramètre afin que celui-ci soit compris entre une borne inférieure et une borne supérieure qui vont dépendre rapport signal sur bruit optimal de la modulation et du taux de codage du code correcteur utilisé.

La borne inférieure est égale au rapport signal sur bruit, requis pour respecter le taux d'erreur binaire (TEB) requis pour la transmission de données, minoré d'une valeur typique de 4dB.

La borne supérieure est égale au rapport signal sur bruit, requis pour respecter le taux d'erreur binaire (TEB) requis pour la transmission de données, majoré d'une valeur typique de 8dB.

La borne inférieure est obtenue en utilisant la relation *C/N PFO - BorneInf* et la borne supérieure est obtenue en utilisant la relation *C/N PFO + BorneSup*, et la valeur de ce premier paramètre (RSB local) est obtenue en utilisant la relation

$$C/_N\, born\acute{e} = \max\ \left(\min\ \left(C/_N\, mesur\acute{e}, C/_N\, PFO + BorneSup\right), C/_N\, PFO - BorneInf\right).$$

Dans ces équations les différents termes représentent :

*C/N PFO* : représente la valeur du rapport signal sur bruit associé à la modulation et au taux de codage du code correcteur.
*C/N borné*: représente le premier paramètre (RSB local) après bornage
*C/N mesuré:* représente le premier paramètre avant bornage

*BorneInf* : représente la borne inférieure du rapport signal sur bruit optimal associé à la modulation et au taux de codage du code correcteur. *BorneInf* a typiquement une valeur de 4dB.

*BorneSup* : représente la borne supérieure du rapport signal sur bruit optimal associé à la modulation et au taux de codage du code correcteur. *BorneSup* a typiquement une valeur de 8dB.

Dans un mode de réalisation la quatrième étape 104 est adaptée pour l'utilisation de la relation :

$$C/_N\, estim\acute{e} = Moyenne\left(C/_N\, born\acute{e}\right) - M\alpha(1 - \alpha)\sigma_{C/_{N born\acute{e}}}$$

Dans ces équations les différents termes représentent :

*M* : Coefficient permettant de donner un poids plus ou moins important à la dispersion des valeurs prise par le rapport signal sur bruit sur les différentes fréquences d'émission. Typiquement la valeur utilisée pour *M* est de 3.
$\alpha$ : est le deuxième paramètre représentatif du taux de fréquences d'émission pour lesquelles des interférences impactent le signal
$\sigma_{C/Nborn\acute{e}}$ est la variance de la dispersion des valeurs prises par les premiers paramètres avec bornage.
*C/N estimé* : représente le quatrième paramètre nommé aussi RSB slot.

De manière générale la fonction introduisant un biais est donnée à titre d'exemple. Une autre fonction peut être définie à conditions de respecter les propriétés suivantes :

- Elle doit dépendre du taux d'interférence a,
- Elle doit s'annuler lorsque $\alpha$ = 0 et $\alpha$ = 1 ,
- Elle doit prendre des valeurs positives quel que soit $1 \geq \alpha \geq 0$.

Dans le cas où il n'y a pas d'interférences alors le coefficient $\alpha$ est nul et *C/N estimé = Moyenne*(*C/N borné*), on retrouve la formule habituelle du calcul du rapport signal sur bruit.

Dans le cas où une interférence impacte l'ensemble des fréquences alors $\alpha$ = 1 et dans ce cas *C/N estimé = Moyenne* (*C/N borné*). On retrouve également la formule habituelle car une interférence impactant l'ensemble des fréquences peut-être assimilée à un bruit blanc gaussien.

Dans les cas où $\alpha$ = 0.5 le biais $M\alpha(1 - \alpha)\sigma_{C/N}{}^{born\acute{e}}$ appliqué au rapport signal sur bruit mesuré et borné est maximal par rapport à une variance $\sigma_{C/Nborn\acute{e}}$ donnée. Ce maximum correspond au cas le plus défavorable par rapport aux conditions de bruit blanc gaussien ($\alpha$ = 0 et $\alpha$ = 1).

Dans un mode de réalisation la cinquième étape 105 est réalisée de la manière suivante :
Le choix des types de modulations et taux de codage du code correcteurs d'erreur (connu aussi sous l'expression anglaise MODCOD pour « modulation and coding » en anglais) est réalisé en fonction du taux de fréquences brouillées $\alpha$.

Lorsque des fréquences sont brouillées le signal relatif à ces fréquences comporte des erreurs résultantes des interférences. Ces erreurs doivent être corrigées par le code correcteur d'erreur à condition que ce dernier ait une capacité de correction adéquate. Afin de maximiser la probabilité de correction en condition d'interférence ($\alpha$ est compris entre 10% et 60%) alors on n'utilise que des codes correcteurs ayant un taux de codage strictement inférieur à ½. Avantageusement on pourra aussi limiter l'ordre de modulations (par exemple se limiter aux modulation à deux valeurs de phase possible de type BPSK (Binary phase-shift keying) ou à quatre valeurs de phase possible de type QPSK (quadrature phase-shift keying).

Idéalement la sous liste des MODCOD pourra dépendre du taux d'interférence $\alpha$. Ainsi les MODCOD QPSK Ratio ¼, QPSK Ratio 1/3 peuvent être utilisés dans le cas d'interférences ($\alpha > 45\%$), alors que les autres MODCOD QPSK Ratio 2/5 et QPSK Ratio ½ peuvent aussi être utilisés dans des conditions d'interférences moindre ($\alpha < 45\%$).

Lorsque le système n'est pas en condition d'interférence ($60\% < \alpha$ ou $\alpha < 10\%$) on utilise l'ensemble des modulations et/ou codage correcteurs d'erreur.

Ensuite on choisit parmi la liste des MODCOD retenus le schéma modulation codage de la forme d'onde optimum tel que le rapport signal à bruit de fonctionnement de ce schéma soit inférieur ou égal au RSB slot mesuré.

Les valeurs des quatrièmes paramètres définissant la modulation et le codage correcteur d'erreurs sont déterminées à partir de la valeur du troisième paramètre.

La figure 2 présente un système de transmission satellitaire utilisant le procédé de l'invention. Ce système comporte un premier terminal 201 qui communique avec un deuxième terminal 202 via un satellite 203. Le deuxième terminal peut également être une station terrestre. On considère que le premier terminal est le récepteur des données et que le deuxième terminal est l'émetteur des données. Les première, deuxième et troisième étapes doivent être réalisées par le premier terminal car c'est le seul qui puisse effectuer les différents calculs. Ensuite il est possible d'avoir un partage des quatrièmes et cinquièmes étapes entre le premier terminal et le deuxième terminal. Dans un cas extrême le premier terminal envoie au deuxième terminal les valeurs des premiers et deuxièmes paramètres (RSB slot) et de la variance de la dispersion des premiers paramètres et celui-ci effectue les étapes quatre et cinq. Dans le cas extrême inverse le premier terminal effectue les étapes quatre et cinq et envoie au deuxième terminal le type de modulation et le type de codage correcteur d'erreur à utiliser pour la transmission des données.

## Revendications

**1.** Procédé de détermination de paramètres de transmission de données émises en utilisant une pluralité de fréquences d'émission et un mode de codage et de modulation adaptatif, **caractérisé en ce qu'**il comporte :

• une première étape (101) de détermination pour chaque fréquence de la valeur d'un premier paramètre représentatif du rapport entre la puissance du signal émis en utilisant ladite fréquence et la puissance du bruit présent sur ladite fréquence,
• une deuxième étape (102) de détermination de la valeur d'un deuxième paramètre égal à un rapport entre le nombre de fréquences dont la valeur dudit premier paramètre est inférieure à un premier seuil dépendant du schéma de modulation et de codage, et le nombre total de fréquences,
• une troisième étape (103) de détermination de la valeur d'un troisième paramètre égal à une variance de la dispersion des valeurs prises par lesdits premiers paramètres,
• une quatrième étape (104) de détermination de la valeur d'un quatrième paramètre égal à la moyenne des valeurs des premiers paramètres diminuée d'une valeur dépendant de la valeur du deuxième et troisième paramètres,
• une cinquième étape (105) de détermination d'un type de modulation et d'un type de code correcteur d'erreur et leurs paramètres respectifs à utiliser pour la transmission des données à partir de la valeur dudit quatrième paramètre.

**2.** Procédé selon la revendication 1 dans lequel ladite première étape est en outre adaptée pour limiter la valeur dudit premier paramètre entre une borne inférieure et une borne supérieure, les valeurs des deux bornes dépendant du mode de codage et de modulation des données émises.

**3.** Procédé selon la revendication 1 ou 2 dans lequel ladite cinquième étape (105) de détermination est adaptée pour la détermination dudit type de modulation et dudit type de code correcteur d'erreur à partir d'une comparaison entre la valeur dudit deuxième paramètre et d'un deuxième seuil, et de la dite valeur du quatrième paramètre.

**4.** Système adapté pour la mise en œuvre du procédé de l'une des revendications 1 à 3 et comportant un premier terminal (201) communicant avec un deuxième terminal (202) via un satellite (203) ;
ledit premier terminal étant adapté pour la mise en œuvre desdites première, deuxième et troisième étape du procédé,
ledit deuxième terminal étant adapté pour la mise en œuvre desdites quatrième et cinquième étape du procédé ; et
lesdits premier et deuxième terminaux étant respectivement adaptés pour émettre et recevoir les valeurs desdits premiers paramètres et de ladite variance.

**5.** Système adapté pour la mise en œuvre du procédé de l'une des revendications 1 à 3 et comportant un premier terminal (201) communicant avec un deuxième terminal (202) via un satellite (203) ;
ledit premier terminal étant adapté pour la mise en œuvre desdites première, deuxième, troisième, quatrième, et cinquième étapes du procédé ; et lesdits premier et deuxième terminaux étant respectivement adaptés pour émettre et recevoir le type de modulation et le type de codage correcteur d'erreur à utiliser pour la transmission des données ainsi que la valeur des paramètres de la modulation et du codage correcteur à utiliser pour la transmission des données.

**Patentansprüche**

**1.** Verfahren zur Bestimmung von Übertragungsparametern von gesendeten Daten unter Verwendung einer Vielzahl von Sendefrequenzen und eines adaptiven Codierungs- und Modulationsmodus, **dadurch gekennzeichnet, dass** es Folgendes beinhaltet:

• einen ersten Schritt (101) der Bestimmung, für jede Frequenz, des Wertes eines ersten Parameters, welcher das Verhältnis zwischen der Leistung des gesendeten Signals unter Verwendung der Frequenz und der Leistung des auf dieser Frequenz vorhandenen Rauschens darstellt,
• einen zweiten Schritt (102) der Bestimmung des Wertes eines zweiten Parameters, welcher einem Verhältnis zwischen der Anzahl der Frequenzen, bei welchen der Wert des ersten Parameters einen ersten Schwellenwert unterschreitet, welcher vom Modulations- und Codierungsschema abhängig ist, und der Gesamtanzahl der Frequenzen entspricht,
• einen dritten Schritt (103) der Bestimmung des Wertes eines dritten Parameters, welcher einer Varianz der Streuung der durch die ersten Parameter angenommenen Werte entspricht,
• einen vierten Schritt (104) der Bestimmung des Wertes eines vierten Parameters, welcher dem Mittelwert der ersten Parameter abzüglich eines Wertes, welcher von dem Wert des zweiten und des dritten Parameters abhängt, entspricht,
• einen fünften Schritt (105) der Bestimmung einer Modulationsart und einer Art des Fehlerkorrektur-Codes und ihrer jeweiligen Parameter, die zur Übertragung der Daten anhand des Wertes des vierten Parameters zu verwenden sind.

**2.** Verfahren nach Anspruch 1, bei welchem der erste Schritt zudem geeignet ist, den Wert des ersten Parameters zwischen einer unteren Grenze und einer oberen Grenze zu begrenzen, wobei die Werte der beiden Grenzen vom Codierungs- und Modulationsmodus der gesendeten Daten abhängen.

**3.** Verfahren nach Anspruch 1 oder 2, bei welchem der fünfte Schritt (105) der Bestimmung geeignet ist zur Bestimmung der Modulationsart und der Art des Fehlerkorrektur-Codes anhand eines Vergleichs des Wertes des zweiten Parameters und eines zweiten Schwellenwertes, und des Wertes des vierten Parameters.

**4.** System, welches zur Umsetzung des Verfahrens nach einem der Ansprüche 1 bis 3 geeignet ist und ein erstes Endgerät (201) beinhaltet, welches mit einem zweiten Endgerät (202) über einen Satelliten (203) kommuniziert; wobei das erste Endgerät zur Umsetzung des ersten, des zweiten und des dritten Schrittes des Verfahrens geeignet ist,
wobei das zweite Endgerät zur Umsetzung des vierten und des fünften Schrittes des Verfahrens geeignet ist; und wobei das erste und das zweite Endgerät jeweils geeignet sind, um die Werte der ersten Parameter und der Varianz zu senden und zu empfangen.

**5.** System, welches zur Umsetzung des Verfahrens nach einem der Ansprüche 1 bis 3 geeignet ist und ein erstes Endgerät (201) beinhaltet, welches mit einem zweiten Endgerät (202) über einen Satelliten (203) kommuniziert; wobei das erste Endgerät zur Umsetzung des ersten, des zweiten, des dritten, des vierten und des fünften Schrittes des Verfahrens geeignet ist; und wobei das erste und das zweite Endgerät jeweils geeignet sind, die Modulationsart und die Art des Fehlerkorrektur-Codes, welche für die Übertragung der Daten verwendet werden sollen, sowie den Wert der Modulations- und der Fehlerkorrektur-Codierungs-Parameter, welche für die Übertragung der Daten verwendet werden sollen, zu senden und zu empfangen.

**Claims**

1. Method for determining transmission parameters of data emitted using a plurality of emission frequencies and an adaptive coding and modulation mode, **characterized in that** it includes:

   • a first step (101) of determining, for each frequency, the value of a first parameter representing the ratio of the power of the signal emitted using said frequency to the power of the noise present on said frequency,
   • a second step (102) of determining the value of a second parameter representing a ratio of the number of frequencies for which the value of said first parameter is below a first threshold dependant on the modulation and coding scheme, and the total number of frequencies,
   • a third step (103) of determining the value of a third parameter representing a variance in the dispersion of the values taken by said first parameters,
   • a fourth step (104) of determining the value of a fourth parameter representing the mean of the values of the first parameters decreased by a value dependent on the value of the second and third parameters,
   • a fifth step (105) of determining a type of modulation and a type of error-correcting code and their respective parameters to be used for the transmission of the data on the basis of the value of said fourth parameter.

2. Method according to Claim 1, in which said first step is furthermore adapted to limit the value of said first parameter between a lower limit and an upper limit, the values of the two limits depending on the coding and modulation mode of the emitted data.

3. Method according to Claim 1 or 2, in which said fifth step (105) of determining is adapted for the determination of said type of modulation and of said type of error-correcting code on the basis of a comparison of the value of said second parameter with a second threshold, and of said value of the fourth parameter.

4. System adapted for the implementation of the method of one of Claims 1 to 3 and including a first terminal (201) communicating with a second terminal (202) via a satellite (203);
   said first terminal being adapted for the implementation of said first, second and third steps of the method,
   said second terminal being adapted for the implementation of said fourth and fifth steps of the method; and
   said first and second terminals being respectively adapted to emit and receive the values of said first parameters and of said variance.

5. System adapted for the implementation of the method of one of Claims 1 to 3 and including a first terminal (201) communicating with a second terminal (202) via a satellite (203);
   said first terminal being adapted for the implementation of said first, second, third, fourth and fifth steps of the method; and said first and second terminals being respectively adapted to emit and receive the type of modulation and the type of error-correcting coding to be used for the transmission of the data as well as the value of the parameters of the modulation and of the correcting code to be used for the transmission of the data.

FIG.1

FIG.2

**EP 2 822 208 B1**

## RÉFÉRENCES CITÉES DANS LA DESCRIPTION

**Documents brevets cités dans la description**

- EP 1641160 A1